Europäisches Patentamt

European Patent Office

Office européen des brevets

(11) Veröffentlichungsnummer: **0 280 090 B1**

# EUROPÄISCHE PATENTSCHRIFT

(45) Veröffentlichungstag der Patentschrift: **27.12.91**

(51) Int. Cl.⁵: **H04Q 11/04**, H04Q 3/68

(21) Anmeldenummer: **88101645.5**

(22) Anmeldetag: **04.02.88**

(54) **Koppelanordnung für mehrstufige Koppelfelder in Fernmeldevermittlungsanlagen, insbesondere Zeitmultiplex-Fernsprechvermittlungsanlagen, mit Koppelvielfachen und diese von Koppelstufe zu Koppelstufe verbindenden Zwischenleitungen.**

(30) Priorität: **20.02.87 DE 3705503**

(43) Veröffentlichungstag der Anmeldung:
**31.08.88 Patentblatt 88/35**

(45) Bekanntmachung des Hinweises auf die
Patenterteilung:
**27.12.91 Patentblatt 91/52**

(84) Benannte Vertragsstaaten:
**AT BE CH DE FR GB IT LI NL SE**

(56) Entgegenhaltungen:

**INTERNATIONAL TELETRAFFIC CONGRESS, ITC-11, Band 5, 1985, Seiten 815-821, Elsevier Science Publishers B.V., Amsterdam, NL; J. CONRADT et al.: "Considerations on loss probability of multi-slot connections"**

(73) Patentinhaber: **SIEMENS AKTIENGESELL-SCHAFT**
**Wittelsbacherplatz 2**
**W-8000 München 2(DE)**

(72) Erfinder: **Niestegge, Gerd, Dr. rer.nat.**
**Krünerstrasse 91**
**W-8000 München 70(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Durch die deutsche Patentschrift 2 333 297 (VPA 73 P 6106) ist ein mehrstufiges Koppelfeld mit Umkehrgruppierung bekannt. In dieser Patentschrift geht es im wesentlichen um das Prinzip eines optimalen Wegesuchverfahrens. Durch das darin angegebene spezielle Wegesuchverfahren wird erreicht, daß der Effekt von unerwünschten inneren Blockierungen weitgehend eliminiert wird. Ganz allgemein betrachtet geht es bei der Dimensionierung eines mehrstufigen Koppelfeldes unter anderem darum, wie in der zweiten bis letzten Koppelstufe die Anzahlen von Koppelvielfachen pro Koppelstufe sowie pro Koppelvielfach die Zahl der Eingänge und Ausgänge zweckmäßig zu dimensionieren sind. In diesem Zusammenhang ist auch die Frage von Bedeutung, wie die Anzahl von Zwischenleitungen, die jeweils von den Koppelvielfachen einer Koppelstufe zu den Koppelvielfachen der jeweils nächstfolgenden Koppelstufe verlaufen, zweckmäßig zu bemessen ist. Grundsätzlich ist dabei sowohl der Gesichtspunkt wesentlich, daß keine inneren Blockierungen auftreten können sollen, als auch der Gesichtspunkt, daß eine mangelhafte Ausnutzung von Koppelschaltmitteln und Zwischenleitungen vermieden werden soll, was durch eine unzweckmäßige Überdimensionierung verursacht werden könnte.

Durch die europäische Patentschrift 0053267 (VPA 80 P 6236) ist es auch bekannt, über ein mehrstufiges Koppelfeld Mehrkanalverbindungen herzustellen, also Mehrfachverbindungen, die von einem einzigen Koppelvielfach einer Eingangsstufe über ein einziges - in der Regel anderes - Koppelvielfach ebenfalls der Eingangsstufe, die in diesem bekannten Falle zugleich die Funktion der Ausgangsstufe hat, durchgeschaltet werden. Solche Mehrfachverbindungen dienen einer Erzielung einer entsprechend höheren Übertragungs-Bandbreite.

Die Erfindung bezieht sich nun auf eine Koppelanordnung für mehrstufige Koppelfelder mit Umkehrgruppierung in Zeitmultiplex-Fernmeldevermittlungsanlagen, insbesondere PCM-Fernsprechvermittlungsanlagen, mit ersten Koppelvielfachen in einer ersten Koppelstufe und zweiten Koppelvielfachen in einer zweiten Koppelstufe, und mit an die Eingänge der Koppelvielfache der ersten Koppelstufe angeschlossenen Verbindungsleitungen, von denen jede insbesondere als ein Paar von Übertragungskanälen für jede der beiden Übertragungsrichtungen ausgebildet ist, und mit insbesondere als Kanalpaare-Bündel ausgebildeten Zwischenleitungsbündeln, von denen die Zwischenleitungen eines jeden Ausgänge jeweils eines der ersten Koppelvielfache mit Eingängen jeweils eines der zweiten Koppelvielfache verbindet, wodurch jedes der ersten Koppelvielfache mit jedem der zweiten Koppelvielfache über eine insgesamt sich aus dem Produkt der Anzahlen von ersten und von zweiten Koppelvielfachen ergebende Zahl von Zwischenleitungsbündeln in Verbindung steht, und mit Verbindungsherstellung sowohl für jeweils nur eine Verbindungsleitung bzw. Zwischenleitung belegende Einfachverbindungen als auch für jeweils eine Mehrzahl von parallelen Verbindungsleitungen bzw. Zwischenleitungen pro Verbindung belegenden und einer Erzielung einer entsprechend höheren Übertragungs-Bandbreite dienenden Mehrfachverbindungen.

In einer Koppelanordnung dieser Art resultiert aus der Tatsache, aufgrund der bei Zeitmultiplex-Koppelanordnungen üblichen Verbindungsdurchschaltung auch über Raum-Zeit-Koppelstufen für die jeweils zu einer Mehrfachverbindung gehörenden einzelnen Verbindungen jeweils die Zeitlage innerhalb der Pulsrahmen wechseln kann, für solche Mehrfachverbindungen das Problem, daß die Pulstelegramm-Reihenfolge pro Mehrfachverbindung gestört werden kann.

Für die Erfindung besteht die Aufgabe, in einer Koppelanordung der angegebenen Art entsprechende Vorkehrungen zu treffen, die eine korrekte Beibehaltung der ursprünglichen Pulstelegramm-Reihenfolge pro Mehrfachverbindung sicherstellt. In diesem Zusammenhang soll durch die Erfindung ferner erreicht werden, daß in einer Koppelanordnung der angegebenen Art für die Durchschaltung von Mehrfachverbindungen ebenso wie für die Durchschaltung von Einfachverbindungen Blockierungsfreiheit innerhalb des Koppelfeldes besteht. Durch eine geeignete Dimensionierung des Koppelfeldes soll aber nicht nur diese Blockierungsfreiheit gewährleistet werden, sondern soll außerdem erreicht werden, diese Blockierungsfreiheit mit einem geringstmöglichen technischen Aufwand innerhalb des Koppelfeldes zu erreichen.

Die Erfindung ist dadurch gekennzeichnet, daß die Mehrfachverbindungen von einem einzigen der ersten Koppelvielfache über ein einziges der zweiten Koppelvielfache zu einem einzigen der ersten Koppelvielfache durchgeschaltet werden und daß die Anzahl von zweiten Koppelvielfachen wenigstens um eins größer ist als das Doppelte eines auf einen ganzzahligen Wert abgerundeten Quotienten aus einerseits der Differenz zwischen eingangsseitig an ein jedes erstes Koppelvielfach angeschlossenen Verbindungsleitungen und der Anzahl von maximal pro Mehrkanalverbindung zu belegenden Verbindungsleitungen bzw. Zwischenleitungen, und andererseits der Differenz zwischen der um eins erhöhten Anzahl von Zwischenleitungen pro Zwischenleitungsbündel und ebenfalls der Anzahl von maximal pro Mehrkanalverbindung zu belegenden Verbindungsleitungen bzw. Zwischenleitungen.

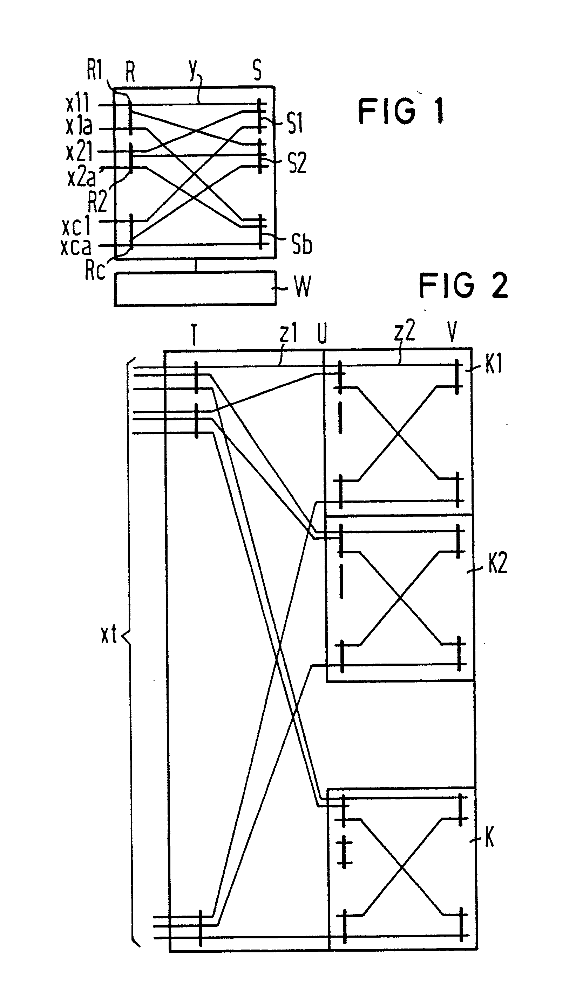

In der Zeichnung, Figuren 1 und 2, sind zwei Ausführungsbeispiele der Erfindung nur in wesentlich zu ihrem Verständnis beitragenden Bestandteilen dargestellt. Dabei zeigt die Figur 1 ein zweistufiges Koppelfeld mit Umkehrgruppierung und Figur 2 ein dreistufiges Koppelfeld, ebenfalls mit Umkehrgruppierung.

In zwei Koppelstufen R und S sind Koppelvielfache vorgesehen. Die Koppelvielfache arbeiten nach dem bekannten Prinzip der Zeitmultiplextechnik, insbesondere nach dem ebenfalls bereits bekannten Prinzip der PCM-Technik. Die Koppelvielfache beider Koppelstufen sind als kombinierte Raumlage-Zeitlage-Koppelvielfache ausgebildet.

An die Koppelvielfache R1 bis Rc der ersten Koppelstufe R sind eingangsseitig Zeitmultiplexleitungen xll bis xca angeschlossen. Jede dieser Zeitmultiplexleitungen umfaßt in an sich bekannter Weise zweiunddreißig Kanalpaare, wobei jeweils ein Kanalpaar zur Durchschaltung einer Verbindung für eine Einfachverbindung geeignet ist.

Die Koppelvielfache der Koppelstufen R einerseits und S andererseits sind über Zeitmultiplex-Zwischenleitungen in der dargestellten Weise verbunden. Eine dieser Zeitmultiplex-Zwischenleitungen ist mit "y" bezeichnet. Jede dieser Zeitmultiplex-Zwischenleitungen umfaßt ebenfalls eine Anzahl von zum Beispiel zweiunddreißig Kanalpaaren.

In Figur 1 ist unter anderem auch eine Wegesucheinrichtung W angedeutet, die in an sich bekannter Weise zur Wegesuche zwecks Ermittlung eines über das Koppelfeld durchschaltbaren freien Verbindungsweges dient. Wegesucheinrichtungen sind an sich bekannt, zum Beispiel durch das Fachbuch von Peter R. Gerke "Rechnergesteuerte Vermittlungssysteme" (Springer-Verlag, Berlin/Heidelberg/New York 1972), worin die betreffenden Erläuterungen anhand des Stichwortes "Wegesuche" im Sachverzeichnis angegeben sind. Die in Figur 1 der Zeichnung dargestellte Wegesucheinrichtung W möge nun zum Beispiel in dieser an sich bekannten Weise aufgebaut sein und arbeiten.

Die Darstellung in Figur 1 zeigt nun also eine Koppelanordnung für ein zweistufiges Koppelfeld mit Umkehrgruppierung in einer Zeitmultiplex-Fernmeldevermittlungsanlage, die als PCM-Fernsprechvermittlungsanlage ausgebildet sein möge. Es sind erste Koppelvielfache in einer ersten Koppelstufe R und zweite Koppelvielfache in einer zweiten Koppelstufe S vorgesehen. An die Eingänge der Koppelvielfache der ersten Koppelstufe R sind Verbindungsleitungen angeschlossen. Diese sind durch die Kanalpaare der Zeitmultiplexleitungen x11 bis xca verwirklicht. Ein Paar von Übertragungskanälen weist in bekannter Weise für jede der beiden Übertragungsrichtungen je einen Kanal auf.

Wie bereits erwähnt wurde, verlaufen zwischen den Koppelvielfachen der ersten Koppelstufe einerseits und den Koppelvielfachen der zweiten Koppelstufe andererseits Zwischenleitungen. Diese Zwischenleitungen sind ebenfalls als Kanalpaare realisiert. Jeweils eine Zeitmultiplex-Zwischenleitung, die von einem Koppelvielfach der ersten Koppelstufe zu einem Koppelvielfach der zweiten Koppelstufe führt, möge - wie bereits erwähnt - zweiunddreißig Kanalpaare umfassen; dies entspricht zweiunddreißig Zwischenleitungen. Jeweils von einem Koppelvielfach der ersten Koppelstufe zu einem Koppelvielfach der zweiten Koppelstufe verläuft also eine Zeitmultiplex-Zwischenleitung. Es verlaufen also so viele Zeitmultiplex-Zwischenleitungen zwischen den Koppelvielfachen der ersten Koppelstufe und den Koppelvielfachen der zweiten Koppelstufe, wie sich aus dem Produkt der Anzahlen von Koppelvielfachen in der ersten Koppelstufe und der Anzahl von Koppelvielfachen der zweiten Koppelstufe ergibt. Jede Zeitmultiplex-Zwischenleitung umfaßt zweiunddreißig Kanalpaare, stellt also gleichsam ein Bündel von Zwischenleitungen dar. Die auf diese Weise realisierten Zwischenleitungen eines jeden dieser Zwischenleitungsbündel verbinden Ausgänge jeweils eines der ersten Koppelvielfache mit Eingängen jeweils eines der zweiten Koppelvielfache. Dadurch ist jedes der ersten Koppelvielfache mit jedem der zweiten Koppelvielfache über eine insgesamt sich aus dem Produkt der Anzahl von ersten und von zweiten Koppelvielfachen ergebende Zahl von Zwischenleitungsbündeln in Verbindung gebracht.

Die Verbindungsherstellung erstreckt sich auf Einfachverbindungen und Mehrfachverbindungen. Einfachverbindungen belegen jeweils nur eine Verbindungsleitung bzw. nur eine Zwischenleitung. Mehrfachverbindungen umfassen jeweils eine Mehrzahl von parallelen Verbindungsleitungen bzw. Zwischenleitungen pro Verbindung und dienen einer Erzielung einer entsprechend höheren Übertragungs-Bandbreite in an sich bekannter Weise.

Durch das in der Wegesucheinrichtung W niedergelegte Wegesuchverfahren ist gewährleistet, daß Mehrfachverbindungen immer von einem einzigen der ersten Koppelvielfache über ein einziges der zweiten Koppelvielfache zu einem einzigen der ersten Koppelvielfache durchgeschaltet werden. Dadurch wird gewährleistet, daß bei einer Durchschaltung von Zeitmultiplexverbindungen über Zeitvielfach-Koppelvielfache bzw. kombinierte Raumvielfach-Zeitvielfach-Koppelvielfache die ursprüngliche Reihenfolge der zu jeweils einer Mehrfachverbindung gehörenden Pulstelegramme unverändert erhalten bleiben. Diese auch als Parallel-Durchschaltung bezeichnete Verbindungsherstellung für Mehrfachverbindungen macht es jedoch erforderlich, daß in den betreffenden Zwischenleitungsbündeln auch immer ausreichend viele Zwischenleitungen frei sind. Soll zum Beispiel eine Mehrfachverbindung über die Koppelvielfache R1, Sb und Rc hergestellt werden, so muß gewährleistet sein, daß sowohl in dem Zwischenleitungsbündel, das vom Koppelvielfach R1 zum Koppelvielfach Sb verläuft, die ausreichende Zahl von freien Zwischenleitungen verfügbar ist, als auch in demjenigen Zwischenleitungsbündel, das vom Koppelvielfach Sb zum Koppelvielfach Rc verläuft. Es müssen also ausreichend viele Zwischenleitungen zugleich in dem einen und in dem anderen der beiden betreffenden Zwischenleitungsbündel verfügbar sein. Ist auch nur in einem der beiden betreffenden Zwischenleitungsbündel nicht die ausreichende Zahl von Zwischenleitungen verfügbar, die für eine Mehrfachverbindung gebraucht werden, so kann die betreffende Mehrfachverbindung über das jeweilige Koppelvielfach, zum Beispiel Sb, nicht durchgeschaltet werden.

Durch die erfindungsgemäße Strukturierung des Koppelfeldes ist nun gewährleistet, daß bei eingangsseitiger Belegung von Verbindungsleitungen für eine Mehrfachverbindung eine solche Mehrfachverbindung über das Koppelfeld gemäß Figur 1 immer durchgeschaltet werden kann, wenn sich für die betreffende Mehrfachverbindung auch die ausreichende Zahl von Verbindungsleitungen findet, die in diesem Zusammenhang abgehend zu belegen wäre. Die Erfindung betrifft deshalb hauptsächlich die Anzahl von zweiten Koppelvielfachen, also von Koppelvielfachen in der Koppelstufe S. Die Anzahl von Zwischenleitungen pro Zwischenleitungsbündel ist durch die Anzahl von Kanalpaaren pro Zeitmultiplex-Zwischenleitung vorgegeben. Diese Vorgabe besteht also in der Auswahl des jeweils verwendeten Zeitmultiplex-Systems für die Zeitmultiplex-Zwischenleitungen.-

Wie bereits ausgeführt wurde, sind an das Koppelfeld eingangsseitig Verbindungsleitungen angeschlossen. Jede Verbindungsleitung möge in entsprechender Weise durch ein Kanalpaar realisiert sein. In der Zeichnung, Figur 1, sind eingangsseitig am Koppelfeld Zeitmultiplexleitungen $x1$ bis $xca$ angedeutet. Jede dieser Zeitmultiplexleitungen umfaßt eine Anzahl von Kanalpaaren. Jedes Kanalpaar stellt eine Verbindungsleitung im Sinne der Erfindung dar. An jedem Koppelvielfach der ersten Koppelstufe R liegen also eingangsseitig so viele Verbindungsleitungen, wie sich aus dem Produkt von Zeitmultiplexleitungen pro Koppelvielfach und von Kanalpaaren pro Zeitmultiplexleitung ergibt.

Die Anzahl von zweiten Koppelvielfachen ist nun wenigstens um eins größer als das doppelte eines auf einen ganzzahligen Wert abgerundeten Quotienten aus einerseits der Differenz zwischen eingangsseitig an ein jedes erstes Koppelviel angeschlossenen Verbindungsleitungen und der Anzahl von maximal pro Mehrkanalverbindung zu belegenden Verbindungsleitungen bzw. Zwischenleitungen, und andererseits der Differenz zwischen der um eins erhöhten Anzahl von Zwischenleitungen pro Zwischenleitungsbündel und ebenfalls der Anzahl von maximal pro Mehrkanalverbindung zu belegenden Verbindungsleitungen bzw. Zwischenleitungen. Durch diese erfindungsgemäße Maßnahme ist sichergestellt, daß Durchschaltungen von Mehrkanalverbindungen über das in Figur 1 dargestellte Koppelfeld immer blockierungsfrei sind. Durch eine Bemessung des Koppelfeldes nach dieser Regel ist nicht nur die erwähnte Blockierungsfreiheit gewährleistet, sondern auch die Tatsache, das der Aufwand an Zwischendeleitungen und Koppelschaltmitteln im Koppelfeld nicht höher ist, als er für die erwähnte Blockierungsfreiheit erforderlich ist.

Die Erfindung ist auch für den Fall anwendbar, daß bei gerader Anzahl von ersten Koppelvielfachen in einer Anordnung gemäß Figur 1 diese gleichmäßig in Eingangskoppelvielfache und Ausgangskoppelvielfache unterteilt sind. Dabei sind die an die Eingangskoppelvielfache angeschlossenen Verbindungsleitungen solche für hinsichtlich der Verbindungsherstellungsrichtung ankommende Belegungen und die an die Ausgangskoppelvielfache angeschlossenen Verbindungsleitungen dementsprechend solche für hinsichtlich der Verbindungsherstellungsrichtung abgehende Belegungen. In diesem Fall ist das Koppelfeld gemäß Figur 1 also dahingehend abgewandelt, daß das in Umkehrgruppierung aufgebaute und dargestellte Koppelfeld in ein Koppelfeld mit gesteckter Gruppierung umgezeichnet werden kann und dementsprechend auch als ein Koppelfeld mit gestreckter Gruppierung anzusehen ist.

Die in Figur 2 gegebene Darstellung zeigt eine Mehrzahl von Koppelanordnungen K1, K2, ... , K. Diese Mehrzahl von Koppelanordnungen ist zu einem einzigen gemeinsamen größeren Koppelfeld zusammengefaßt. Zu diesem Koppelfeld gehört außerdem noch eine Reihe von Koppelvielfachen in einer zusätzlichen Koppelstufe T. Die Koppelstufen U und V entsprechen also den Koppelstufen R und S in Figur 1. Es ist also eine Mehrzahl von Koppelanordnungen gemäß Figur 1 vorgesehen. Ihnen ist eine der Anzahl von Eingängen pro Koppelanordnung entsprechende Anzahl von zusätzlichen Koppelvielfachen in der zusätzlichen Koppelstufe T vorgeordnet. Die Verbindungsleitungen sind an die Eingänge der Koppelvielfache der zusätzlichen Koppelstufe T angeschlossen. Jedes Koppelvielfach der zusätzlichen Koppelstufe T ist über je ein Bündel von zusätzlichen Zwischenleitungen mit je einer der mehreren Koppelanordnungen, und zwar innerhalb einer jeden derselben mit einem Koppelvielfach der ersten Koppelstufe verbunden. Die Anzahl von Zwischenleitungen pro Zwischenleitungsbündel und die Anzahl von zusätzlichen Zwischenleitungen pro Bündel von zusätzlichen Zwischenleitungen ist gleich. In Figur 2 ist ein Zwischenleitungsbündel zum Beispiel dasjenige, das mit "z2" bezeichnet ist. Ein Bündel von zusätzlichen Zwischenleitungen ist in Figur 2 zum Beispiel dasjenige, das mit "z1" bezeichnet ist. Gemäß Figur 2 ist also eine Mehrzahl von Koppelanordnungen vorgesehen, denen eine der Anzahl von Eingängen pro Koppelanordnung entsprechende Anzahl von zusätzlichen Koppelvielfachen vorgeordnet ist. Die Verbindungsleitungen sind in diesem Falle an deren Eingänge statt an die Eingänge der ersten Koppelvielfache angeschlossen. Jedes Koppelvielfach der zusätzlichen Koppelstufe T ist über je ein Bündel von zusätzlichen Zwischenleitungen (zum Beispiel z1) mit je einer der mehreren Koppelanordnungen, und zwar innerhalb einer jeden derselben jeweils mit einem Koppelvielfach der ersten Koppelstufe (U) verbunden. Die Anzahl von Zwischenleitungen pro Zwischenleitungsbündel und die Anzahl von zusätzlichen Zwischenleitungen pro Bündel von zusätzlichen Zwischenleitungen ist gleich. Die genannte Mehrzahl von Koppelanordnungen ist ebenso groß wie innerhalb einer Koppelanordnung die Anzahl von zweiten Koppelvielfachen.

Auch im Falle einer die Erfindung weiterbildenden Realisierung derselben gemäß Figur 2 ist eine Wegesucheinrichtung vorgesehen, die zur Auffindung freier Verbindungswege und Signalisierung derselben an eine Durchschalteeinrichtung dient. Wie bereits ausgeführt, werden im Zusammenhang des erfindungsgemäßen Ausführungsbeispieles Wegesucheinrichtungen der angesprochenen Art als durch die Literatur bekannt vorausgesetzt.

**Patentansprüche**

1. Koppelanordnung für mehrstufige Koppelfelder mit Umkehrgruppierung in Zeitmultiplex-Fernmeldevermittlungsanlagen, insbesondere PCM-Fernsprechvermittlungsanlagen, mit ersten Koppelvielfachen ($R_1$, $R_2$, $R_c$) in einer ersten Koppelstufe (R) und zweiten Koppelvielfachen ($S_1$, $S_2$, $S_b$) in einer zweiten Koppelstufe (S), und mit an die Eingänge der Koppelvielfache der ersten Koppelstufe angeschlossenen Verbindungsleitungen (z.B.:Y), von denen jede insbesondere als ein Paar von Übertragungskanälen für jede der beiden Übertragungsrichtungen ausgebildet ist, und mit insbesondere als Kanalpaare-Bündel ausgebildeten Zwischenleitungsbündeln, von denen die Zwischenleitungen eines jeden Ausgänge jeweils eines der ersten Koppelvielfache mit Eingängen jeweils eines der zweiten Koppelvielfache verbindet, wodurch jedes der ersten Koppelvielfache mit jedem der zweiten Koppelvielfache über eine insgesamt sich aus dem Produkt der Anzahlen von ersten und von zweiten Koppelvielfachen ergebende Zahl von Zwischenleitungsbündeln in Verbindung steht, und mit Verbindungsherstellung sowohl für jeweils nur eine Verbindungsleitung bzw. Zwischenleitung belegende Einfachverbindungen als auch für jeweils eine Mehrzahl von parallelen Verbindungsleitungen bzw. Zwischenleitungen pro Verbindung belegenden und einer Erzielung einer entsprechend höheren Übertragungs-Bandbreite dienenden Mehrfachverbindungen,

**dadurch gekennzeichnet,** daß die Koppelanordnung derart ausgestaltet ist, daß die Mehrfachverbindungen von einem einzigen der ersten Koppelvielfache über ein einziges der zweiten Koppelvielfache zu einem einzigen der ersten Koppelvielfache durchgeschaltet werden und daß die Anzahl von zweiten Koppelvielfachen wenigstens um eins größer ist als das Doppelte eines auf einen ganzzahligen Wert abgerundeten Quotienten aus einerseits der Differenz zwischen eingangsseitig an ein jedes erstes Koppelvielfach angeschlossenen Verbindungsleitungen und der Anzahl von maximal pro Mehrkanalverbindung zu belegenden Verbindungsleitungen bzw. Zwischenleitungen, und andererseits der Differenz zwischen der um eins erhöhten Anzahl von Zwischenleitungen pro Zwischenleitungsbündel und ebenfalls der Anzahl von maximal pro Mehrkanalverbindung zu belegenden Verbindungsleitungen bzw. Zwischenleitungen.

2. Anordnung nach Anspruch 1,
**dadurch gekennzeichnet,**
daß eine Mehrzahl von Koppelanordnungen ($K_1$, $K_2$,....,K) vorgesehen ist, denen eine der Anzahl von Eingängen pro Koppelanordnung entsprechende Anzahl von zusätzlichen Koppelvielfachen vorgeordnet ist, und daß die Verbindungsleitungen an deren Eingänge statt an die Eingänge der ersten Koppelvielfache angeschlossen sind, und daß jedes Koppelvielfach der zusätzlichen Koppelstufe über je ein Bündel von zusätzlichen Zwischenleitungen mit je einer der mehreren Koppelanordnungen, und zwar innerhalb einer jeden derselben jeweils mit einem Koppelvielfach der ersten Koppelstufe verbunden ist, und daß die Anzahl von Zwischenleitungen pro Zwischenleitungsbündel und die Anzahl von zusätzlichen Zwischenleitungen pro Bündel von zusätzlichen Zwischenleitungen gleich ist, und daß die genannte Mehrzahl von Koppelanordnungen ebenso groß ist wie innerhalb einer Koppelanordnung die Anzahl von zweiten Koppelvielfachen.

3. Anordnung nach Anspruch 1,
   **dadurch gekennzeichnet,**
   daß bei gerader Anzahl von ersten Koppelvielfachen diese gleichmäßig in Eingangskoppelvielfache und Ausgangskoppelvielfache unterteilt sind, und daß die an die Eingangskoppelvielfache angeschlossenen Verbindungsleitungen solche für hinsichtlich der Verbindungsherstellungsrichtung ankommende Belegungen und die an die Ausgangskoppelvielfache angeschlossenen Verbindungsleitungen dementsprechend solche für abgehende Belegungen sind.

## Claims

1. Switching arrangement for multi-stage switching networks with reverse grouping in time-division multiplex telecommunications exchanges, preferably PCM telecommunications exchanges, having first switching matrices ($R_1$, $R_2$, $R_c$) in a first switching stage (R) and second switching matrices ($S_1$, $S_2$, $S_b$) in a second switching stage (S) and having, connected to the inputs of the switching matrices of the first switching stage, connecting lines (e.g.:Y), each of which is configured preferably as a pair of transmission channels for each of the two transmission directions, and having link line groups, configured preferably as channel pair line groups, of which the link lines of each of the outputs of in each case one of the first switching matrices is connected to the inputs of in each case one of the second switching matrices, by means of which each of the first switching matrices is connected to each of the second switching matrices via a number of link line groups made up, in total, from the product of the numbers of first and of second switching matrices, and with connections being established both for in each case only a single connection loading a connecting line or link line and for in each case multiple connections loading a multiplicity of parallel connecting lines or link lines for each connection and used to achieve a correspondingly higher transmission band width, characterised in that the switching arrangement is designed such that the multiple connections of just one of the first switching matrices are switched through to just one of the first switching matrices via just one of the second switching matrices, and in that the number of second switching matrices is at least one greater than double the quotients, rounded off to an integer, of on the one hand the difference between connecting lines connected on the input side to in each case a first switching matrix and the number of connecting lines or link lines to be loaded as a maximum for each multi-channel connection, and on the other hand the difference between the number of link lines per link line group, increased by one, and, likewise, the number of connecting lines or link lines to be loaded, as a maximum, for each multi-channel connection.

2. Arrangement according to Claim 1, characterised in that a multiplicity of switching arrangements ($K_1$, $K_2$,..., K) is provided, arranged in front of which are a number of additional switching matrices corresponding to the number of inputs of each switching arrangement, and in that the connecting lines are connected to the inputs of the said switching arrangements rather than to the inputs of the first switching matrices, and in that each switching matrix of the additional switching stage is connected via in each case one group of additional link lines to in each case one of the plurality of switching arrangements and, specifically, inside in each case one of the same, in each case to a switching matrix of the first switching stage, and in that the number of link lines in each link line group is equal to the number of additional link lines in each group of additional link lines, and in that the stated multiplicity of switching arrangements is of equal size to the number of second switching matrices inside a switching arrangement.

3. Arrangement according to Claim 1, characterised in that, with an even number of first switching matrices, these are divided equally into input switching matrices and output switching matrices, and in that the connecting lines connected to the input switching matrices are suitable for the incoming loadings with respect to the connection establishment direction and the connecting lines connected to the output switching matrices are correspondingly suitable for outgoing loadings.

## Revendications

1. Dispositif de couplage pour des champs de couplage à plusieurs étages à groupage à rebroussement dans des installations de commutation de télécommunications à multiplexage temporel, notamment des installations de commutation téléphonique MIC, comportant des premiers multiples de couplage ($R_1$,$R_2$,$R_c$) dans un premier étage de couplage (R) et des seconds multiples de couplage ($S_1$,$S_2$,$S_b$) dans un second étage de couplage (S), et des lignes de jonction (par exemple : Y), qui sont raccordées aux entrées des multiples de couplage du premier étage de couplage et dont chacune est réalisée notamment sous la forme d'un couple de canaux de transmission pour chacun des deux sens de transmission, et comportant des faisceaux de lignes intermédiaires, qui sont réalisés notamment sous la forme de faisceaux de couples de canaux et parmi lesquels les lignes intermédiaires de chacune des sorties respectivement de l'un de premiers multiples de couplage sont raccordées à des entrées respectivement de l'un des seconds multiples de couplage, ce qui a pour effet que chacun des premiers multiples de couplage est raccordé à chacun des seconds multiples de couplage par l'intermédiaire d'un nombre de faisceaux de lignes intermédiaires qui est fourni globalement par le produit des nombres des premiers et des seconds multiples de couplage, avec l'établissement aussi bien de liaisons simples occupant respectivement seulement une ligne de jonction ou une ligne intermédiaire, que pour des liaisons multiples occupant respectivement une multiplicité de lignes de jonction ou de lignes intermédiaires parallèles pour chaque liaison et servant à obtenir une bande de transmission ayant une largeur correspondante accrue,

caractérisé par le fait que le dispositif de couplage est agencé de telle sorte que les liaisons multiples sont interconnectées par un seul des premiers multiples de couplage, par l'intermédiaire d'un seul des seconds multiples de couplage, avec un seul des premiers multiples de couplage et que le nombre de seconds multiples de couplage est au moins supérieur d'une unité au double d'un quotient, arrondi à un nombre entier, d'une part de la différence entre des lignes de jonction raccordées, côté entrée, à chaque premier multiple de couplage, et le nombre de lignes de jonction ou de lignes intermédiaires devant être occupées au maximum pour une liaison à canaux multiples, et d'autre part de la différence entre le nombre, accru d'une unité, de lignes intermédiaires pour chaque faisceau de lignes intermédiaires et également le nombre de lignes de jonction ou de lignes intermédiaires devant être occupées au maximum pour chaque liaison à canaux multiples.

2. Dispositif suivant la revendication 1, caractérisé par le fait

qu'il est prévu une multiplicité de dispositifs de couplage ($K_1, K_2, ....., K$), en amont desquels est disposé un nombre de multiples de couplage supplémentaires, qui correspond au nombre des entrées pour chaque dispositif de couplage, et que les lignes de jonction sont raccordées aux entrées des multiples de couplage supplémentaires et non aux entrées du premier multiple de couplage et que chaque multiple de couplage de l'étage de couplage supplémentaire est raccordé, par l'intermédiaire d'un faisceau respectif de lignes intermédiaires supplémentaires, à un dispositif respectif faisant partie de la pluralité de dispositifs de couplage, et ce respectivement avec un multiple de couplage du premier étage de couplage, à l'intérieur de chaque dispositif de couplage, et que le nombre des lignes intermédiaires dans chaque faisceau de lignes intermédiaires et le nombre de lignes intermédiaires supplémentaires pour chaque faisceau de lignes intermédiaires supplémentaires sont égaux et que ladite multiplicité de dispositifs de couplage est égale au nombre de seconds multiples de couplage à l'intérieur d'un dispositif de couplage.

3. Dispositif suivant la revendication 1, caractérisé par le fait

que dans le cas d'un nombre pair de premiers multiples de couplage, ces derniers sont répartis uniformément en multiples de couplage d'entrée et en multiples de couplage de sortie, et que les lignes de jonction, qui sont raccordées aux multiples de couplage d'entrée, sont des lignes de jonction pour des occupations qui arrivent dans le sens d'établissement de liaison, et que les lignes de jonction raccordées aux multiples de couplage de sortie sont, de façon correspondante, des lignes de jonction pour des occupations de départ.

FIG 1

FIG 2